# EUROPEAN PATENT APPLICATION

(11) **EP 3 379 484 A1**
(43) Date of publication of application: **26.09.2018**
(21) Application number: 18163388.4
(22) Date of filing: 22.03.2018
(51) Int. Cl.: G06Q 30/02

(54) **ADVERTISEMENT DISTRIBUTION APPARATUS AND CONTROL METHOD THEREOF**

(30) Priority: 22.03.2017 JP 2017056634
(71) Applicant: Toshiba TEC Kabushiki Kaisha, Tokyo 141-8562 (JP)
(72) Inventor: WATANABE, Akiko, Shinagawa-ku,, Tokyo 141-8562 (JP)
(74) Representative: Takeuchi, Maya

(57) **Abstract**

According to one embodiment, there is provided an advertisement distribution apparatus that distributes advertisement data to a customer and includes a determination unit and a distribution unit. If there is advertisement data to be distributed to the customer, the determination unit determines distribution timing for the customer of the advertisement data based on attribute data relating to the customer. The distribution unit distributes the advertisement data to the customer at the distribution timing determined by the determination unit.

## Description

### FIELD

Embodiments described herein relate generally to an advertisement distribution apparatus and a control method thereof.

### BACKGROUND

In the retail industry where competition is intensifying, a point system or an advertisement mail distribution system is introduced in order to keep good customers and increase the number of customers visiting a store. The point system is useful for keeping customers and increasing customer transactions. The advertisement mail distribution system is useful for urging customers to visit a store or increasing the number and frequency of visits to the store.

Although customers visiting the store do not necessarily purchase some kind of commodities, an increase in the number of customers visiting the store directly leads to an increase in the number of purchasers. Accordingly, there is a need for an advertisement distribution apparatus capable of distributing an advertisement that increases the number of customers visiting the store.

The advertisement that intends to increase the number of customers visiting the store should also appeal to the customer's feelings. For example, such an advertisement needs to stimulate self-esteem of the customer. That is, it should be not only the advertisement informing a customer of simple sale about bargain information, campaign information, or the like but also the advertisement focusing on the customer's feeling. For that purpose, there is a need for an advertisement distribution apparatus capable of distributing a sophisticated advertisement based on customer's personal characteristics.

### SUMMARY OF INVENTION

To solve the above-cited problems, there is provided an advertisement distribution apparatus that distributes advertisement data to a customer comprising:
a determination unitconfiguredto determine distribution timing of the advertisement data to the customer based on attribute data relating to the customer, if the advertisement data to be distributed to the customer is present; and
a distribution unit configured to distribute the advertisement data to the customer at the distribution timing determined by the determination unit.

In an exemplary embodiment, the determination unit preferably may be configured to determine either normal distribution timing or preferential distribution timing before the normal distribution timing as the distribution timing.

Preferably the determination unit may be configured to determine the distribution timing for the customer as the preferential distribution timing when attribute data relating to the customer satisfies a predetermined condition and determines the distribution timing as the normal distribution timing when the condition is not satisfied.

Preferably yet, if the customer is determined as a good customer based on the attribute data or if the customer is determined to have a high possibility of purchasing a commodity advertised by the advertisement data based on the attribute data, the determination unit is configured to determine the distribution timing as the preferential distribution timing.

Preferably yet, if it can be determined, based on the attribute data, that a distance from a place of residence of the customer to the store advertised by the advertisement data is equal to or greater than a predetermined reference distance, the determination unit is configured to determine the distribution timing as the preferential distribution timing.

Preferably the apparatus according to the embodiments may further comprise a storage device to store the attribute data.

In another exemplary embodiment there is also provided a control method of an advertisement distribution apparatus that distributes advertisement data to a customer, the method comprising:
determining distribution timing of the advertisement data to the customer based on attribute data relating to the customer, if the advertisement data to be distributed to the customer is present; and
distributing the advertisement data to the customer at the distribution timing determined by the determination unit.

Preferably the determining step may comprise determining either normal distribution timing or preferential distribution timing before the normal distribution timing as the distribution timing.

Preferably the determining step may comprise determining the distribution timing for the customer as the preferential distribution timing when attribute data relating to the customer satisfies a predetermined condition and determining the distribution timing as the normal distribution timing when the condition is not satisfied.

Preferably yet, if the customer is determined as a good customer based on the attribute data or if the customer is determined to have a high possibility of purchasing a commodity advertised by the advertisement data based on the attribute data, the determining step comprises determining the distribution timing as the preferential distribution timing.

Preferably yet, if it can be determined, based on the attribute data, that a distance from a place of residence of the customer to the store advertised by the advertisement data is equal to or greater than a predetermined reference distance, the determining step comprises determining the distribution timing as the preferential distribution timing.

In yet another exemplary embodiment, there is also provided a computer program product comprising program code means stored on a computer readable medium for performing the method according to the embodiments.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a block diagram illustrating a configuration of a main circuit of an advertisement distribution apparatus according to an embodiment and a configuration of an advertisement distribution system using the advertisement distribution apparatus.
FIG. 2 is a diagram illustrating what kind of information is included as an amount of information for a single customer in a member management table of FIG. 1.
FIG. 3 is a diagram illustrating what kind of information is included concerning a single advertisement included in the advertisement management table of FIG. 1.
FIG. 4 is a flowchart of information processing to be performed by a processor of FIG. 1 based on an advertisement distribution application.

### DETAILED DESCRIPTION

An exemplary embodiment provides an advertisement distribution apparatus capable of distributing the sophisticated advertisement based on the customer's personal characteristics and a control method thereof.

According to one embodiment, there is provided an advertisement distribution apparatus that distributes advertisement data to a customer and includes a determination unit and a distribution unit. If there is advertisement data to be distributed to a customer, the determination unit determines distribution timing for the customer of the advertisement data based on attribute data relating to the customer. The distribution unit distributes the advertisement data to the customer at the distribution timing determined by the determination unit.

In the following, an example of an embodiment will be described with reference to the drawings. In the present embodiment, an example of providing an advertisement distribution service as an additional service to a member of a point service will be described.

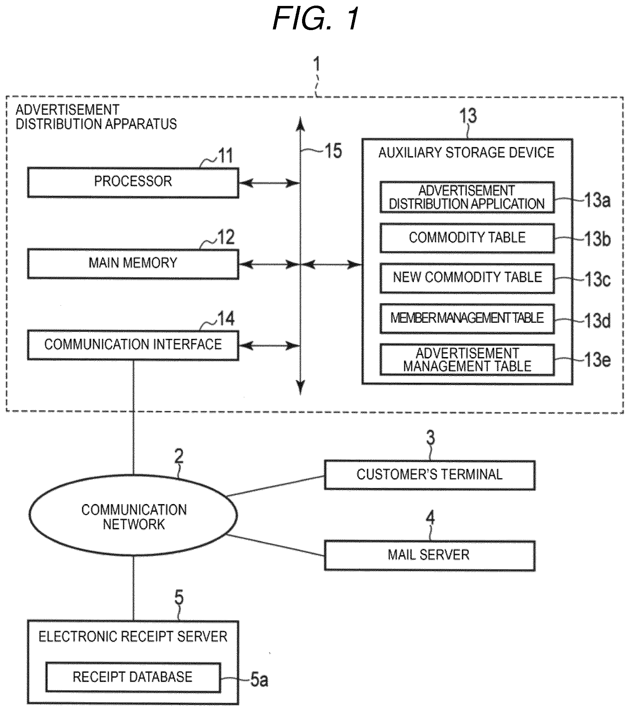

FIG. 1 is a block diagram illustrating a configuration of a main circuit of an advertisement distribution apparatus according to the present embodiment and a configuration of an advertisement distribution system using the advertisement distribution apparatus.

An advertisement distribution apparatus 1 provides an advertisement distribution service for distributing advertisement data for enabling a customer registered as a member of a point service to view an advertisement on a customer's terminal 3 which is an information terminal possessed by the customer. In the present embodiment, an e-mail is used for sending advertisement data. That is, the advertisement distribution apparatus 1 designates a mail address pre-registered for each customer as a destination and transmits an e-mail including advertisement data (hereinafter, referred to as "advertisement e-mail") to the customer's terminal 3 through a communication network 2 and a mail server 4. The advertisement data may be data representing contents of the advertisement or data such as a uniform resource locator (URL) for accessing another data representing the contents of the advertisement through the communication network 2. The advertisement data may be included in the body of the e-mail or may be included in an attached file. The advertisement distribution apparatus 1 may refer to a receipt database 5a held by an electronic receipt server 5 in order to distribute the advertisement data.

The advertisement distribution apparatus 1 includes a processor 11, a main memory 12, an auxiliary storage device 13, a communication interface 14, and a bus 15 which is a transmission path. As hardware of the advertisement distribution apparatus 1, for example, a general-purpose information processing apparatus can be used.

In the advertisement distribution apparatus 1, the processor 11, the main memory 12, and the auxiliary storage device 13 are connected through the bus 15 to thereby configure a computer that controls the advertisement distribution apparatus 1.

The processor 11 corresponds to a central portion of the computer. The processor 11 controls respective units to realize various functions as the advertisement distribution apparatus 1 according to an operating system or an application program.

The main memory 12 corresponds to a main memory portion of the computer. The main memory 12 includes a nonvolatile memory area and a volatile memory area. The main memory 12 stores the operating system or the application program in the nonvolatile memory area. The main memory 12 may store data necessary for the processor 11 to execute various types of information processing in the nonvolatile or the volatile memory area. The main memory 12 uses the volatile memory area as a work area where data is appropriately rewritten by the processor 11.

The auxiliary storage device 13 corresponds to an auxiliary storage portion of the computer. The auxiliary storage device 13 is, for example, an electric erasable programmable read-only memory (EEPROM), a hard disc drive (HDD), a solid state drive (SSD), or the like. The auxiliary storage device 13 stores data used for the processor 11 to perform various kinds of information processing and data generated by processing by the processor 11. The auxiliary storage device 13 may store the application program described above.

The communication interface 14 is an interface for data communication through the communication network 2.

The bus 15 includes an address bus, a data bus, and the like, and transmits data and signals exchanged between each connected unit described above.

One of the application programs stored in the auxiliary storage device 13 is an advertisement distribution application 13a which is a program describing information processing to be described later for advertisement distribution. A portion of a storage area of the auxiliary storage device 13 is used as a commodity table 13b, a new commodity table 13c, a member management table 13d, and an advertisement management table 13e.

The commodity table 13b includes various pieces of information about each of the commodities which can become an advertisement target. The information included in the commodity table 13b is, for example, a commodity code, a category code, a maker code, and the like. The commodity code is a unique code for the commodity. The category code is a code unique to a commodity category to which the commodity belongs. The maker code is a code for identifying a maker that manufactures the commodity. The commodity table may include a commodity name, a unit price, a commodity sales date, an advertisement transmission flag, and the like.

The new commodity table 13c includes various pieces of information about new commodities which are newly released in a recent predetermined period. The information included in the new commodity table 13c may include, for example, the commodity code, the category code, a release date, and the like. The new commodity table 13c may include the commodity name, a maker unit price, commodity description, an image link, an advertisement transmission desired flag, a commodity sales date, and the like.

The member management table 13d includes various pieces of information about customers who are registered members.

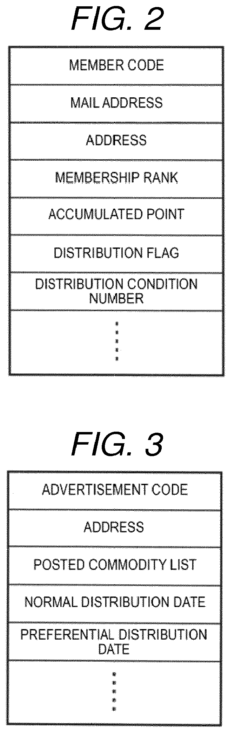

FIG. 2 is a diagram illustrating what kind of information is included as an amount of information for a single customer in the member management table 13d.

As illustrated in FIG. 2, the member management table 13d includes a mail address, an address, a membership rank, an accumulated point, a distribution flag, a distribution condition number, and the like in association with the member code. In addition to the information illustrated in FIG. 2, the member management table 13d may include information such as a member name, a member registration date, a message transmission flag, a message transmission date and time, or an advertisement transmission completion date and time.

The customer code is a code for identifying each customer who is a registered member.

The mail address is an address which is set in advance as a transmission destination of the advertisement mail.

The address indicates a location of a customer's place of residence. The address may represent a residence display or may represent the longitude and latitude.

The membership rank is a numerical value indicating a rank which is set for use of the point service for the customer. For example, it is assumed that as the customer becomes better for a store, the larger value is set for the membership rank. However, how to determine a quality level of the customer is not a feature of the present embodiment, but the quality level of the customer may be arbitrarily determined by the store or the like. As an example, it is assumed that the larger the total purchase amount in a certain period in the store, or the larger the accumulated point number, a larger membership rank is set.

If the customer desires to receive distribution of the advertisement, the distribution flag is set.

A distribution condition number is a number which is set for identifying each of the plurality of conditions relating to distribution of the advertisement. In the present embodiment, as the distribution condition number, the higher the matters which are considered that distribution of the advertisement under the corresponding distribution condition is likely to lead to a purchase behavior of the customer, a larger value is set. However, how to determine the distribution condition and the distribution condition number is not a feature of the present embodiment, but the distribution condition and the distribution condition number may be arbitrarily determined by a service provider. In the member management table 13d, the distribution condition number of the distribution condition selected by the customer is indicated.

Information included in the member management table 13d is written into the member management table 13d by the processor 11 in response to an instruction from the customer at the time of member registration, for example. The information included in the member management table 13d may be rewritten by the processor 11 in response to a change instruction from the customer.

The advertisement management table 13e includes various pieces of information about the advertisement which becomes a distribution target.

FIG. 3 is a diagram illustrating what kind of information is included concerning a single advertisement included in the advertisement management table 13e.

As illustrated in FIG. 3, the advertisement management table 13e includes an address, a posted commodity list, a normal distribution date, a preferential distribution date, and the like in association with the advertisement code. In addition to the information illustrated in FIG. 3, the advertisement management table 13e may include information such as an advertisement publication date, for example.

The address of the advertisement management table 13e is an address indicating a location of a store or the like which becomes an advertisement target. If a plurality of stores or the like which become the advertisement target exist, each address of the plurality of stores are included. That is, for example, for the advertisement code of the advertisement related to a special sale to be commonly conducted at chain stores, each address of the plurality of stores in which the special sale is conducted are associated. If a specific store is not targeted for the advertisement, information about the address is not included in the advertisement management table 13e or included in the advertisement management table 13e as a predetermined invalid value. That is, for example, for an advertisement code of an advertisement related to a new commodity to be sold at an unspecific store, the address is not associated or an invalid value is associated. The address may represent a residence display or may represent the longitude and latitude, but it is preferable that the address is the same type as the address included in the member management table 13d.

The advertisement code is a code for identifying each advertisement.

The posted commodity list is a list of commodity codes of commodities to be posted in the advertisement. There may be only one commodity listed in the list.

Both the normal distribution date and the preferential distribution date are information indicating timing to distribute an advertisement. The normal distribution date is a date on which a normal distribution of advertisement is performed. The preferential distribution date is a date on which preferential distribution of advertisement (hereinafter, referred to as preferential distribution) is performed. As the preferential distribution date, a date before the normal distribution date is set in principle. The preferential distribution date may not be set. If the preferential distribution date is not set, the advertisement management table may not include information as the preferential distribution date, or a predetermined invalid value may be included as information of the preferential distribution date.

Next, description will be made on the operation of the advertisement distribution apparatus 1 configured as described above. When the advertisement distribution apparatus 1 is in a normal operation state, the processor 11 executes information processing once for each customer of all customers, based on the advertisement distribution application 13a, which targets a single person of the customers who are registered as members, within a predetermined period. In this embodiment, it is assumed that a date in units of days is set as the normal distribution date and the preferential distribution date, and the advertisement to be distributed is distributed once at the distribution dates.

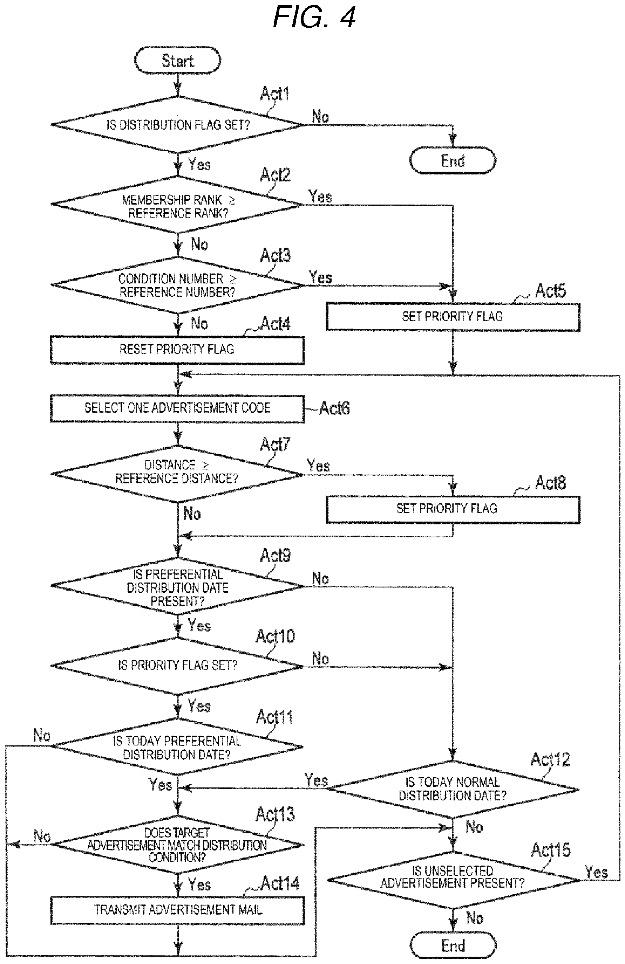

FIG. 4 is a flowchart of information processing to be performed by a processor 11 of FIG. 1 based on an advertisement distribution application 13a. The contents of the processing to be describedbelow are merely examples, and various processing capable of obtaining similar results can be appropriately used.

As Act 1, the processor 11 confirms whether a distribution flag illustrated in the member management table 13d in association with a member code of a target customer is a set state or not. If the target customer does not desire to receive distribution of the advertisement, the distribution flag illustrated in the member management table 13d in association with the member code of the customer is a reset state. Accordingly, when the corresponding distribution flag is in reset state, the processor 11 determines that the confirmation result is "No" and ends information processing illustrated in FIG. 4 without performing processing for advertisement distribution to be described later. In contrast, when the target customer desires to receive the distribution of the advertisement, the distribution flag illustrated in the member management table 13d in association with the member code of the customer is the set state. Accordingly, when the corresponding distribution flag is in set state, the processor 11 determines that the confirmation result is "Yes" and proceeds to Act 2.

As Act 2, the processor 11 confirms whether a membership rank of the target customer is equal to or greater than a predetermined reference rank or not. The reference rank is a threshold for dividing a customer into two groups according to the membership rank. The reference rank may be arbitrarily determined by, for example, the service provider. Then, when the membership rank is lower than the reference rank and thus, it is determined that the determination result is "No", the processor 11 proceeds to Act 3.

As Act 3, the processor 11 confirms whether a distribution condition number of the target customer is equal to or larger than a reference number or not. The reference number is a threshold for dividing the customer into two groups according to the distribution condition. The reference number may be arbitrarily determined by, for example, the service provider. When the distribution condition number is less than the reference number and thus, it is determined that the determination result is "No", the processor 11 proceeds to Act 4.

As Act 4, the processor 11 sets a priority flag to the reset state. The priority flag is a flag for temporarily managing whether the target customer is a target of the preferential distribution at the present time or not and the reset state indicates that the customer is not a target person of the preferential distribution.

On the other hand, if the membership rank is equal to or greater than the reference rank, or if the distribution condition number is equal to or greater than the reference number, the processor 11 determines that the determination result in Act 2 or Act 3 is "Yes" and proceeds to Act 5.

As Act 5, the processor 11 sets the priority flag to the set state. That is, if the target customer is a good member whose membership rank is equal to or greater than the reference rank, or if the distribution condition to be applied to the target customer is likely to cause the distribution of the advertisement to lead to the purchase behavior of the customer to a certain extent, the priority flag is set to the set state.

After the priority flag is set in Act 4 or Act 5, the processor 11 proceeds to Act 6 in either case.

As Act 6, the processor 11 selects one of the advertisement codes included in the advertisement management table 13e. In the following description, an advertisement identified by the advertisement code selected here is referred to as a target advertisement.

As Act 7, the processor 11 confirms whether a distance between an address of the store and a customer's address is equal to or greater than a predetermined reference distance or not. The address of the store here is the address indicated in the advertisement management table 13e in association with the advertisement code of the target advertisement. The customer's address is the address indicated in the member management table 13d concerning the target customer. When a plurality of addresses of the stores are illustrated in the advertisement management table 13e in association with the advertisement code of the target advertisement, the processor 11 calculates each distance between addresses of stores and the customer's addresses. The processor 11 compares the shortest distance among the calculated distances with the reference distance. The member management table 13d may include information about stores that the customers frequently utilize. When one of the plurality of addresses of the stores is an address of the store that the target customer frequently utilizes, the processor 11 may compare the distance between the address of the store and the customer' s address with the reference distance. When the distance between the address of the store and the customer's address is equal to or greater than the reference distance, the processor 11 determines that the confirmation result is "Yes" and proceeds to Act 8.

As Act 8, the processor 11 sets the priority flag to the set state. That is, if the target store of the advertisement exists and the distance to the store from the customer's residence is far than a certain reference distance, the processor 11 sets the priority flag to the set state. If the priority flag is set to the set state in Act 5, the processor 11 may omit Act 7 and Act 8.

When Act 8 is ended, the process proceeds to Act 9 by the processor 11. The distance between the address of the store and the customer's address is less than the reference distance and thus, when it is determined that the confirmation result in Act 7 is "No", the processor 11 passes Act 8 and proceeds to Act 9.

As Act 9, the processor 11 confirms whether the preferential distribution date is set for the target advertisement or not. Then, when information indicating a valid preferential distribution date is included in the advertisement management table 13e in association with the advertisement code of the target advertisement, the processor 11 determines that the confirmation result is "Yes" and the process proceeds to Act 10.

As Act 10, the processor 11 confirms whether the priority flag is the set state or not. Then, when the priority flag is the set state, the processor 11 determines that the determination result is "Yes" and proceeds to Act 11.

As Act 11, the processor 11 confirms whether today is the preferential distribution date or not.

On the other hand, when the information indicating an effective preferential distribution date is not included in the advertisement management table 13e in association with the advertisement code of the target advertisement, the processor 11 determines that the determination result in Act 9 is "No". When the priority flag is the reset state, the processor 11 determines that the confirmation result in Act 10 is "No". Then, the processor 11 proceeds to Act 12 in either case.

As Act 12, the processor 11 confirms whether today is the normal distribution date which is set for the target advertisement or not.

If today is the preferential distribution date or the normal distribution date, the processor 11 determines that the confirmation result in Act 11 or Act 12 is "Yes" and the processor 11 proceeds to Act 13 in either case.

As Act 13, the processor 11 confirms whether the target advertisement matches the distribution condition which is set by the target customer or not. Specifically, concerning the distribution condition which corresponds to the distribution condition number included in the member management table 13d in association with the customer code of the target customer, the processor 11 confirms whether the target advertisement matches or not.

For example, the distribution conditions are assumed as the following five conditions.

Distribution condition number "5": The same commodity as the commodity purchased by the target customer in the past is included in the posted commodities.

Distribution condition number "4" : A new commodity of which the maker and the category are the same as those of the commodity purchased by the target customer in the past, respectively, is included in the posted commodities.

Distribution condition number "3" : An arbitrary commodity of which the maker and the category are the same as those of the commodity purchased by the target customer in the past, respectively, is included in the posted commodities.

Distribution condition number "2" : A new commodity of which the maker is arbitrary and of which the category is the same as that of the commodity purchased by the target customer in the past is included in the posted commodities.

Distribution condition number "1": An arbitrary commodity of which the maker is arbitrary and of which the category is the same as that of the commodity purchased by the target customer in the past is included in the posted commodities.

The processor 11 accesses an electronic receipt server 5 in order to determine whether these distribution conditions are met. The electronic receipt server 5 provides an electronic receipt service to a member of the point service. That is, information about commodities purchased in the past by the members of the point service is recorded in the receipt database 5a. The processor 11 assumes the commodity recorded in the receipt database 5a in association with the target customer as a commodity purchased by the target customer in the past. In addition, the processor 11 determines whether each maker of the posted commodity, the commodity purchased by the target customer in the past, and the new commodity are the same or not, by comparing the maker codes included in the commodity table 13b in association with the commodity codes of each commodity. Further, the processor 11 determines whether each category of the posted commodity, the commodity purchased by the target customer in the past, and the new commodity are the same or not, by comparing category codes included in the commodity table 13b and the new commodity table 13c in association with the commodity codes of each commodity.

When the target advertisement matches the distribution condition which is set by the target customer, the processor 11 determines that the confirmation result in Act 13 is "Yes" and proceeds to Act 14.

As Act 14, the processor 11 transmits the advertisement mail to a mail server 4 from the communication interface 14 by using a mail address, which is included in the member management table 13d in association with the customer code of the target customer, as the destination. The processor 11 acquires advertisement data associated with the advertisement code of the target advertisement, and includes the advertisement data in the body of the advertisement mail or attaches the advertisement data to the body. The advertisement data may be saved in an auxiliary storage device 13 or may be saved in any external storage device such as a storage device included in an arbitrary server device accessible from the advertisement distribution apparatus 1 through the communication network 2. The advertisement mail is transmitted by the mail server 4 to the customer's terminal 3 with which the mail address is associated. Otherwise, the advertisement mail is taken out from the mail server 4 to the customer' s terminal 3, by allowing the customer's terminal 3 to access the mail server 4. Accordingly, when the advertisement data included in the body of the advertisement mail or attached to the body directly represents the contents of the advertisement, the target customer is able to confirm the contents of the advertisement displayed by a mailer or a browser provided in the customer's terminal 3. In addition, when the advertisement data indicates the URL, the target customer is able to confirm the contents of the displayed advertisement by accessing the URL by the browser of the customer's terminal 3.

Here, all of the membership rank, a setting situation of the distribution condition, or the distance between the address of the store and the customer's address may be regarded as attribute data of the customers. The fact that the processor 11 sets the priority flag to the set state or the reset state in Act 4, Act 5, and Act 8 based on the determination results in Act 2, Act 3, and Act 7 corresponds to determining the distribution timing. Thus, the processor 11 executes information processing based on the advertisement distribution application 13a, so that the computer having the processor 11 as the central portion functions as a determination unit for determining the distribution timing based on attribute data of the customer. The computer having the processor 11 as the central portion functions as a distribution unit for distributing the advertisement data at the determined distribution timing.

When transmitting of the advertisement mail is ended, the processor 11 proceeds to Act 15. If today is not the preferential distribution date and thus, it is determined that the confirmation result in Act 11 is "No" or if the target advertisement does not match the distribution condition and thus, it is determined that the confirmation result in Act 13 is "No", the processor 11 passes Act 14 and proceeds to Act 15. When today is not a normal distribution date and thus, it is determined that the confirmation result in Act 12 is "No", the processor 11 passes Act 13 and Act 14 and proceeds to Act 15.

As Act 15, the processor 11 confirms whether there is any advertisement code, which is not yet selected, among the advertisement codes included in the advertisement management table 13e or not. When it is determined that there is the advertisement code which is not yet selected, the processor 11 determines that the determination result is "Yes" and repeats processing at and after Act 6 in the same manner as described above. However, if Act 6 is executed for the second time or later, the processor 11 selects an advertisement code that does not been selected in Act 6 so far. With this, the processor 11 sequentially executes processing of Act 6 to Act 14 by regarding each of the advertisements managed by the advertisement management table 13e as a target advertisement. When processing of Act 6 to Act 14 is ended by regarding each advertisement managed by the advertisement management table 13e as the target advertisement, the processor 11 determines that the determination result in Act 15 is "No". Accordingly, in this case, the processor 11 ends information processing illustrated in FIG. 4.

As described above, according to the advertisement distribution apparatus 1, advertisements are preferentially distributed to only some of the customers who are members in preference to other customers. Accordingly, a customer who preferentially receives distribution of advertisements can plan the purchase of commodities or the like in consciousness of the advertisement from early. That is, it is possible to distribute the sophisticated advertisement based on personal characteristics of customers. Distribution of an advertisement at the preferential distribution date is a special service for customers who receive the advertisement and can give superiority and profit to the corresponding customer.

When it is intended to distribute the advertisement to all customers who are members at the preferential distribution date, there is a concern that loss of an advertiser's side due to refraining from buying commodities may become too large. In contrast, according to the advertisement distribution apparatus 1, the above effect can be efficiently obtained while the loss of the advertiser's side is suppressed.

According to the advertisement distribution apparatus 1, a customer whose membership rank related to the point service is equal to or greater than the reference rank is set as a target of preferential distribution. Accordingly, the preferential distribution can be performed as a special service to a good member of the point service. By changing a value of the reference rank, it is possible to change a ratio between the customer who is a target of the preferential distribution and the customer who is not the target. It is convenient when the reference rank can be arbitrarily changed. Also, it may be possible to set the reference rank for each advertisement.

According to the advertisement distribution apparatus 1, it is determined, according to a distribution condition of an advertisement designated by the customer, whether the preferential distribution is to be performed or not. Accordingly, it is possible to effectively distribute advertisements to customers highly likely to lead to purchase of commodities targeted for advertisement by advertisement. For example, when the customer requests advertisement information about the same commodity as the commodity purchased by the customer in the past, it may be regarded that the customer is highly likely to purchase the corresponding commodity if the corresponding commodity becomes the commodity targeted for the advertisement. Accordingly, it is possible to improve the advertisement effect by preferentially distributing the advertisement to such customers. By changing matters on which distribution condition is to be targeted for preferential distribution, it is possible to change a ratio between the customers who are the target of the preferential distribution and the customers who are not the target of the preferential distribution. Accordingly, it is convenient when which distribution condition to be targeted for preferential distribution can be arbitrarily set. Also, such setting may be made for each advertisement.

According to the advertisement distribution apparatus 1, a customer for which the distance from a store targeted for advertisement to the place of residence of the customer is equal to or greater than the reference distance is set as a target of preferential distribution. Accordingly, it is possible to give a sufficient examination period to such a customer and to increase the possibility that the customer visits the store targeted for advertisement by ignoring inconvenience. Determination of such distribution target is particularly effective for distribution of the advertisement related to a time service. Customers who live far away to the store targeted for the advertisement are required to depart from their residence earlier than customers who live closer in order to visit the store during a time service period. By changing the value of the reference distance, it is possible to change the ratio between the customers who are the target of the preferential distribution and the customers who are not the target of the preferential distribution. Accordingly, it is convenient when the reference distance can be arbitrarily set. It may be possible to set the reference distance for each advertisement.

According to the advertisement distribution apparatus 1, the same advertisement is distributed to the customers targeted for the preferential distribution at both the preferential distribution date and the normal distribution date. For that reason, if the customer forgets the contents of the advertisement distributed at the preferential distribution date, the customer becomes able to remember from the distribution performed at the normal distribution date again.

For the present embodiment, the following various modification examples can be made.

A portion of the information processing described above to be performed by the processor 11 may be omitted. For example, the processor 11 may not perform one or two of Act 2, Act 3, and Act 7. If the processor 11 does not perform Act 7, the processor 11 also does not perform Act 8 and proceeds from Act 6 to Act 9.

The advertisement distributed to a certain customer at the preferential distribution date may not be distributed to the same customer at the normal distribution date. By doing as such, the same advertisement is not distributed to the same customer many times and the customer does not feel annoyed. Whether the customer desires to receive distribution of the same advertisement at both the preferential distribution date and the normal distribution date or not may vary for each customer. Accordingly, whether to distribute the same advertisement at both of the preferential distribution date and the normal distribution date or not may be set for each customer by the advertisement distribution apparatus 1.

The distribution dates may be set to three or more levels. In this case, information about three or more distribution dates is included in the advertisement management table 13e instead of the normal distribution date and preferential distribution date. The processor 11 selects one of the distribution dates of three or more levels by comparing at least one of the determinations in Act 2, Act 3, and Act 7 by using a plurality of reference values. Otherwise, the processor 11 may select one of distribution dates of three or more levels according to the determination results in Act 2, Act 3 and Act 7. As an example, if it is determined that the determination result in Act 2 is "Yes", the earliest distribution date may be selected, if it is determined that the determination results in Act 3 and Act 7 are "Yes", the second earliest distribution date may be selected, and if it is determined that the determination results in Act 2, Act 3, and Act 7 are determined as "No", the latest distribution date may be selected, respectively.

The processor 11 may add the target advertisement to a list of distribution candidate advertisements as Act 14, may determine that the determination result in Act 15 is "No", and then may transmit the advertisement included in the list of distribution candidate advertisements by one e-mail. In this case, if a large number of advertisements are included in the list of distribution candidate advertisements, the processor 11 may divide the advertisements into a plurality of groups and transmit the e-mail for each group.

The advertisement mail transmitted from the communication interface 14 to the mail server 4 by regarding the mail address included in the member management table 13d in association with the customer code of the target customer as a destination. The processor 11 acquires the advertisement data associated with the advertisement code of the target advertisement, and includes the advertisement data in the body of the advertisement mail or attaches the advertisement data to the body. The advertisement data may be saved in the auxiliary storage device 13 or may be stored in an external arbitrary storage device such as a storage device included in an arbitrary server device accessible from the advertisement distribution apparatus 1 through the communication network 2.

The member management table 13d may not be stored in the auxiliary storage device 13, but may refer to the same type table stored in an arbitrary storage device under the management of another device that provides the point service.

A customer who is a member of a service other than the point service may be targeted for the advertisement distribution. The customer may be registered as a member of the advertisement distribution service by the advertisement distribution device 1. That is, the advertisement distribution service is not necessarily provided to the customer together with either one of the point service and the electronic receipt service or both services, but may be provided to the customer as a single service.

If the advertisement distribution service is provided to a customer who is a member of a point service without providing the electronic receipt service, for information about commodities purchased by the customer in the past, a purchase history per a member of the point service can be appropriated. Information about the commodities purchased by the customer in the past may not be appropriated for being recorded for the electronic receipt service as in the embodiment described above, but may be recorded in a database prepared for the advertisement distribution service.

The function of the advertisement distribution apparatus 1 may be provided in the mail server 4, the electronic receipt server 5, or another web server.

Data representing the purchase history of the customer may be stored in, for example, the auxiliary storage device 13 in the advertisement distribution device 1. The processor 11 may make the determination as Act 13 based on only the data stored in the auxiliary storage device 13, or based on the data and the receipt database 5a.

Hardware of the advertisement distribution apparatus 1 and the application program which is a procedure of information processing executed on the hardware may be assigned by the same provider to the user of the advertisement distribution apparatus 1 and may be individually assigned to the user by different providers. If the same provider assigns the hardware of the advertisement distribution apparatus 1 and the application program to the user of the advertisement distribution apparatus 1, the application program is generally assigned in a state of being stored in the main memory 12 or the auxiliary storage device 13 which is the hardware of the advertisement distribution apparatus 1. However, even in such a case of assignment, there is no necessity that the application program is in a state of being stored in the main memory 12 or the auxiliary storage device 13 which is the hardware of the advertisement distribution apparatus 1. For example, the application program may be assigned in a state of being recorded not in the hardware of the advertisement distribution apparatus 1 but in a removable recording medium such as a magnetic disk, a magneto-optical disk, an optical disk, or a semiconductor memory, or the like, otherwise may be assigned by being downloaded from a network resource.

Some or all of the functions to be realized by the processor 11 by information processing can be realized by hardware such as a logic circuit or the like which executes information processing not based on a program. Each of the functions described above can also be realized by combining software control with hardware such as logic circuit described above.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the scope of the inventions. The accompanying claims and their equivalents are intended to cover such forms or modifications as would fall within the scope of the inventions.

## Claims

1. An advertisement distribution apparatus that distributes advertisement data to a customer comprising:
a determination unitconfiguredto determine distribution timing of the advertisement data to the customer based on attribute data relating to the customer, if the advertisement data to be distributed to the customer is present; and
a distribution unit configured to distribute the advertisement data to the customer at the distribution timing determined by the determination unit.

2. The apparatus according to claim 1,
wherein the determination unit is configured to determine either normal distribution timing or preferential distribution timingbefore the normal distribution timing as the distribution timing.

3. The apparatus according to claim 2,
wherein the determination unit is configured to determine the distribution timing for the customer as the preferential distribution timing when attribute data relating to the customer satisfies a predetermined condition and determines the distribution timing as the normal distribution timing when the condition is not satisfied.

4. The apparatus according to claim 3,
wherein, if the customer is determined as a good customer based on the attribute data or if the customer is determined to have a high possibility of purchasing a commodity advertised by the advertisement data based on the attribute data, the determination unit is configured to determine the distribution timing as the preferential distribution timing.

5. The apparatus according to claim 3,
wherein, if it can be determined, based on the attribute data, that a distance from a place of residence of the customer to the store advertised by the advertisement data is equal to or greater than a predetermined reference distance, the determination unit is configured to determine the distribution timing as the preferential distribution timing.

6. The apparatus according to any one of claims 1 to 5, further comprising a storage device to store the attribute data.

7. A control method of an advertisement distribution apparatus that distributes advertisement data to a customer, the method comprising:
determining distribution timing of the advertisement data to the customer based on attribute data relating to the customer, if the advertisement data to be distributed to the customer is present; and
distributing the advertisement data to the customer at the distribution timing determined by the determination unit.

8. The method according to claim 7,
wherein the determining step comprises determining either normal distribution timing or preferential distribution timing before the normal distribution timing as the distribution timing.

9. The method according to claim 8,
wherein the determining step comprises determining the distribution timing for the customer as the preferential distribution timing when attribute data relating to the customer satisfies a predetermined condition and determining the distribution timing as the normal distribution timing when the condition is not satisfied.

10. The method according to claim 9,
wherein, if the customer is determined as a good customer based on the attribute data or if the customer is determined to have a high possibility of purchasing a commodity advertised by the advertisement data based on the attribute data, the determining step comprises determining the distribution timing as the preferential distribution timing.

11. The apparatus according to claim 9,
wherein, if it can be determined, based on the attribute data, that a distance from a place of residence of the customer to the store advertised by the advertisement data is equal to or greater than a predetermined reference distance, the determining step comprises determining the distribution timing as the preferential distribution timing.

12. A computer program product comprising program code means stored on a computer readable medium for performing the method according to any one of claims 7 to 11.
